(19) Europäisches Patentamt
European Patent Office
Office européen des brevets

(11) Numéro de publication: **0 098 229**
**B1**

(12) # FASCICULE DE BREVET EUROPÉEN

(45) Date de publication du fascicule du brevet: **15.10.86**

(21) Numéro de dépôt: **83420085.9**

(22) Date de dépôt: **20.05.83**

(51) Int. Cl.⁴: **C 08 K 3/34**, C 08 K 9/04, C 09 C 1/28, C 09 C 3/12

(54) **Compositions pour moulage à base de polymères renforcés par des charges minérales, des procédés de préparation de ces compositions, des moyens destinés à la mise en oeuvre de ces procédés et les objets conformes issus de ces compositions.**

(30) Priorité: **28.05.82 FR 8209524**

(43) Date de publication de la demande: **11.01.84 Bulletin 84/2**

(45) Mention de la délivrance du brevet: **15.10.86 Bulletin 86/42**

(84) Etats contractants désignés: **AT BE CH DE FR GB IT LI LU NL SE**

(56) Documents cité:
**US-A-3 419 517**

**CHEMICAL ABSTRACTS, vol. 88, no. 6, 6 février 1978, page 191, no. 40772b, Columbus, Ohio, USA K.A. GALABUTSKAYA et al.: "Change in the phase composition of talc during calcination"**
**H.S. KATZ et al.: "Handbook of fillers and reinforcements for plastics", 1978, pages 160-171, Van Nostrand Reinhold Company, New York, USA**
**CHEMICAL ABSTRACTS, vol. 86, no. 22, 30 mai 1977, page 42, no. 156532m, Columbus, Ohio, USA**

**Le dossier contient des informations techniques présentées postérieurement au dépôt de la demande et ne figurant pas dans le présent fascicule.**

(73) Titulaire: **RHONE- POULENC SPECIALITES CHIMIQUES, "Les Miroirs" 18, Avenue d'Alsace, F-92400 Courbevoie (FR)**

(72) Inventeur: **Segaud, Christian, 39, rue Balagny, F-93600 Aulnay Sous Bois (FR)**

(74) Mandataire: **Trolliet, Maurice, RHONE- POULENC INTERSERVICES Service Brevets Chimie Centre de Recherches de Saint- Fons B.P. 62, F-69192 Saint- Fons Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

**Description**

La présente invention concerne des compositions pour moulage comprenant un polymère et une charge minérale de renforcement dans lesquelles la charge minérale est liée au polymère par l'intermédiaire éventuel d'un agent de couplage. Plus précisément, la présente invention concerne des compositions à base de polymères renforcés de nature thermoplastique, thermodurcissable ou élastomérique, dans lesquelles la charge minérale présente une capacité d'accrochage qui est améliorée. La présente invention concerne également des procédés de préparation de ces compositions, des moyens destinés à la mise en oeuvre de ces procédés et les objets conformés obtenus par moulage de ces compositions.

Il est bien connu dans la technique antérieure que des polymères peuvent être chargés de substances non polymériques dans le but d'améliorer certaines de leurs propriétés. C'est ainsi que diverses charges minérales peuvent être utilisées dans le but notamment d'améliorer les propriétés mécaniques du polymère, par exemple son coefficient de dilatation et/ou sa résistance à l'abrasion et/ou son module et/ou sa résistance à la traction et/ou sa résistance à la flexion et/ou sa résilience. La clef du développement de pareilles compositions chargées réside dans l'établissement d'un lien effectif entre la charge et le polymère. Sans un pareil lien, l'addition de la charge pourra dégrader certaines propriétés mécaniques du polymère.

Pour établir ce lien effectif, on va jouer sur la nature de la charge, mais on peut prévoir le cas échéant de faire appel en plus à un agent de couplage efficace, c'est-à-dire un composé qui va pouvoir réagir à la fois avec le polymère et avec la charge inorganique. Il doit posséder au moins un groupe capable de réagir avec le polymère et au moins un autre groupe capable de réagir avec les groupes fonctionnels présents sur la surface de la charge (habituellement des groupes OH). Certains composés organosiliciques ont été utilisés comme agent de couplage. Des composés de ce type qui conviennent sont décrits par exemple dans le brevet français n° 1 399 049; ils comportent en général, comme groupes capables de se lier avec la charge, des groupes alkoxysilanes

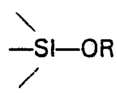

dans lesquels R représente un reste alkyle inférieur.

En général, les charges minérales ne sont pas toutes également efficaces comme charge de renforcement. Une condition nécessaire à cette efficacité réside dans l'existence à la surface de la charge d'une densité adéquate de groupes fonctionnels qui vont pouvoir réagir avec le polymère et éventuellement l'agent de couplage. De nombreuses charges minérales ont été proposées parmi lesquelles les plus représentatives consistent dans les espèces suivantes: du carbonate de calcium, de l'oxyde de titane, de la silice micronisée, un aluminosilicate comme du kaolin calciné, un magnésosilicate comme du talc, de la wollastonite, du sulfate de calcium.

Des expériences qui ont été conduites par la demanderesse en utilisant comme polymère du nylon 6,6 ont permis de noter que le kaolin calciné et le talc apparaissent comme les charges qui peuvent permettre d'obtenir le meilleur compromis de propriétés mécaniques; il convient d'ajouter que la préférence est donnée au talc eu égard au plus faible retrait des pièces moulées que procure cette charge.

Poursuivant des travaux dans ce domaine de la technique, la demanderesse a maintenant trouvé d'autres charges efficaces qui permettent d'atteindre un compromis de propriétés mécaniques qui peut être supérieur à celui enregistré jusqu'ici.

Plus spécifiquement, la présente invention concerne des compositions faites pour le moulage qui comprennent:

(a) un polymère,

(b) une charge minérale de renforcement,

(c) et éventuellement un agent de couplage,

caractérisés en ce que la charge minérale est essentiellement constituée par un mélange intime d'enstatite et de silice tel qu'il est obtenu par calcination à une température au moins égale à 800°C d'espèces argileuses appropriées.

Comme espèces argileuses qui conviennent, on citera par exemple: la chlorite, l'illite, la palygorskite, la saponite, le talc ou des mélanges de ces espèces.

Les polymères qui sont renforcés conformément à la présente invention peuvent être en premier lieu des matières synthétiques thermoplastiques de masse moléculaire en nombre élevée, d'une valeur au moins supérieure à 2000, qui se ramollissent lorsqu'on les expose à une chaleur suffisante et qui reviennent à leur état d'origine lorsqu'elles sont refroidies jusqu'à température ambiante. Ces matières thermoplastiques comprennent par exemple: les polyoléfines; le polychlorure de vinyle et ses copolymères; les polyamides; les polyesters saturés; les polycarbonates; les polyuréthanes thermoplastiques.

Une classe préférée de polymères thermoplastiques utilisables dans la présente invention est constituée par les polyoléfines, les polyamides et les polycarbonates. Des espèces représentatives de

polyoléfines sont par exemple: les polyéthylènes haute et basse densités; le polypropylène; les copolymères éthylène-propylène. Par polyamides, on entend définir essentiellement les produits obtenus par polycondensation de diacides et de diamines ou par homopolycondensation d'aminoacides ou encore par polymérisation de lactames. Des espèces représentatives de pareils polyamides sont par exemple: le nylon 6,6 (polymère d'hexaméthylène diamine et d'acide adipique); le nylon 6,10 (polymère d'hexaméthylène diamine et d'acide sébacique); le nylon 6 (polymère d'ε-caprolactame); le nylon 7 (polymère d'acide aminoheptanoïque); le nylon 9 (polymère d'acide aminononanoïque; le nylon 11 (polymère d'acide ω-aminoundécanoïque); les mélanges de ces polymères; les copolymères obtenus à partir des monomères cités ci-avant. Par polycarbonates, on entend définir essentiellement les produits résultant de l'action de l'acide carbonique sur des composés aromatiques dihydroxylés dans lesquels les groupes hydroxyles sont directement rattachés à un noyau aromatique. Un exemple particulièrement représentatif est le polycarbonate de bisphénol A.

Les polymères qui sont renforcés conformément à la présente invention peuvent être en deuxième lieu des matières synthétiques thermodurcissables qui, sous l'action de la chaleur, commencent par se ramollir (si elles ne sont pas déjà sous forme molle), puis se durcissent progressivement pour atteindre un état solide qu'elles conserveront définitivement. Ces matières thermodurcissables comprennent par exemple: les résines phénoliques; les polyesters insaturés; les résines époxy; les polyimides; les polyuréthanes réticulés.

Une classe préférée de polymères thermodurcissables utilisables dans la présente invention est constituée par les résines phénoliques et les polyimides. Par résines phénoliques, on entend définir essentiellement les produits obtenus par polycondensation des aldéhydes et des phénols. Des espèces représentatives de pareilles résines phénoliques sont par exemple les condensats de phénol, résorcinol, crésol ou xylénol avec du formaldéhyde ou du furfural. Par polyimides, on entend définir essentiellement les produits obtenus par réaction entre un N,N'-bis-imide d'acide dicarboxylique non saturé et une polyamine primaire. Des produits de ce type sont décrits dans le brevet français n° 1 555 564, dans les brevets américains n° 3 562 223 et 3 658 764 et dans la réissue américaine n° 29 316. Un exemple particulièrement présentatif est le produit obtenu par réaction entre le N,N' - 4,4' - diphénylméthane - bis - maléimide et le diamino - 4,4' - diphénylméthane.

Les polymères qui sont renforcés conformément à la présente invention peuvent être en troisième lieu des matières élastomériques d'origine naturelle ou synthétique. Ces matières comprennent par exemple: les caoutchoucs naturels; les homopolymères de diènes conjugués comme le butadiène et l'isoprène; les copolymères dérivés de monomères éthyléniques et/ou vinylaromatiques et de diènes conjugués comme les copolymères styrène-butadiène, les copolymères isobutylène-isoprène (caoutchoucs butyl), les copolymères éthylène-propylène-hexadiène-1,4; les copolymères butadiène-acrylonitrile; les caoutchoucs halogénés comme les caoutchoucs naturels chlorés, les caoutchoucs butyl bromés et butyl chlorés, les polychloroprènes; des polyuréthanes élastomères; les polysulfures; les silicones élastomères.

Une classe préférée de polymères élastomériques utilisables dans la présente invention est constituée par les polychloroprènes et les silicones élastomères. Par silicones élastomères, on entend définir essentiellement les produits obtenus par réticulation à chaud de polysiloxanes porteurs de groupements alkyles, alcényles, cycloalkyles, phényles et/ou hydroxyles. Un exemple particulièrement représentatif est un élastomère diméthylpolysiloxanique contenant une faible proportion de groupements vinyles.

Parmi les divers types de polymères mentionnés ci-avant, les polymères qui sont visés, de manière plus préférentielle encore, pour être renforcés conformément à la présente invention consistent dans les polyamides. Les nylons 6,6 et 6 et leurs mélanges sont tout particulièrement visés.

Les charges minérales de renforcement selon la présente invention sont constituées par des argiles appropriées ayant subi un traitement de calcination. Ce traitement consiste à chauffer la matière minérale choisie à une température au moins égale à 800°C en opérant dans l'air ambiant, sous atmosphère d'azote ou sous atmosphère d'air humide; on peut travailler dans un four statique, dans un four tournant ou dans un appareil de calcination flash. Cette calcination développe d'une part une réaction de déshydroxylation de la matière minérale qui va perdre à partir de 800°C son eau de structure et d'autre part une réaction de transformation de sa structure cristallographique de départ qui va donner naissance à un mélange intime d'enstatite et de silice sous forme de silice amorphe et/ou de silice cristallisée à l'état de cristobalite. Précédemment, on a écrit que la charge minérale est "essentiellement constituée" par un mélange intime d'enstatite et de silice; par l'expression "essentiellement", on entend signifier que le mélange de calcination peut contenir en plus de faibles quantités d'impuretés minérales liées à la nature du gisement qui ne constituent pas une gêne. La durée du chauffage n'est pas critique et peut varier entre de larges limites comme par exemple entre quelques fractions de seconde (cas d'une calcination flash) et une dizaine d'heures (cas d'une calcination dans un four statique ou tournant). Cette durée doit bien entendu être dans tous les cas suffisante pour réaliser la transformation cristallographique dont on a parlé ci-avant.

La charge minérale de renforcement qui est utilisée de manière préférentielle pour mettre en oeuvre la présenté invention consiste dans du talc calciné par chauffage dans un four statique ou tournant à une température comprise entre 900°C et 1100°C pendant une durée allant de deux heures à cinq heures. A noter que l'emploi d'un pareil talc pour renforcer des polyamides correspond à un mode de réalisation de l'invention tout particulièrement intéressant.

La granulométrie de la charge de renforcement est une variable qui ne présente pas un caractère

spécialement critique; habituellement, on fait appel à une charge comportant des particules dont les dimensions sont comprises entre 0,1 micromètre et 100 micromètres et de préférence entre 0,5 micromètre et 50 micromètres. Quant à la surface spécifique des particules, elle ne constitue pas non plus une variable spécialement critique; habituellement, elle se situe entre 1 et 25 $m^2/g$ et de préférence entre 2 et 15 $m^2/g$.

La quantité de charge minérale de renforcement à utiliser pour préparer les compositions selon l'invention peut varier entre de larges limites. La proportion maximale est limitée principalement par la capacité du polymère de lier la charge de renforcement en une masse possédant de la cohésion; habituellement, cette proportion maximale représente environ 90% du poids de l'ensemble polymère+charge minérale de renforcement. La proportion minimale correspond à la quantité de charge qui est nécessaire pour commencer à observer une amélioration des propriétés mécaniques du polymère; habituellement, cette proportion minimale représente environ 2% du poids de l'ensemble polymère+charge minérale de renforcement. Les proportions de charges de renforcement utilisables peuvent donc se situer entre 2% et 90%; de préférence, ces proportions se situent entre 10% et 60%.

Les compositions selon la présente invention peuvent comprendre en outre, et il s'agit là d'une mesure particulièrement avantageuse, un agent de couplage. Cet agent de couplage est habituellement choisi parmi les composés organosiliciques polyfonctionnels dont on a parlé ci-avant dans le préambule du présent mémoire. Ces composés comprennent au moins un groupe alkoxysilane capable de se lier avec la charge minérale et au moins un autre groupe capable de se lier avec le polymère. La nature de cet autre groupe fonctionnel va dépendre bien entendu du polymère utilisé. Ainsi les agents de couplage contenant des groupes vinyle sont des composés utilisables par exemple avec les polyoléfines et les polyesters thermodurcissables; des exemples de composés organosiliciques qui conviennent sont: le vinyltriméthoxysilane, le vinyltriéthoxysilane, le vinyltri(méthoxy-2 éthoxy)silane. Les agents de couplage contenant des groupes acrylique ou méthacrylique sont des composés utilisables encore avec les polyoléfines et les polyesters thermodurcissables; un exemple de composé organosilicique qui convient est: le γ-méthacryloxypropyltriméthoxysilane. Les agents de couplage aminés sont des composés utilisables par exemple avec le polychlorure de vinyle, les polyamides, les polyesters thermoplastiques, les polycarbonates, les polyuréthanes thermoplastiques, les résines phénoliques, les résines époxy et les polyimides; des exemples de composés organosiliciques qui conviennent sont: le γ-aminopropyltriméthoxysilane, le γ-aminopropyltriéthoxysilane, le N-(β-aminoéthyl) γ-aminopropyltriméthoxysilane. Les agents de couplage époxydés sont des composés utilisables encore avec les polyesters thermoplastiques, les résines phénoliques et les résines époxy; des exemples de composés organosiliciques qui conviennent sont: le β-(époxy-3,4 cyclohexyl)éthyltriméthoxysilane, le γ-glycidoxypropyltriméthoxysilane. Les agents de couplage contenant des groupes mercapto sont des composés utilisables par exemple avec les polychloroprènes; un exemple de composé organosilicique qui convient est: le γ-mercaptopropyltriméthoxysilane.

Comme agents de couplage, peuvent convenir encore des azidosilanes (ou silanesulfonylazides); des composés de ce type sont décrits par G. A. Mc. Farren et al. dans l'article: Polymer Engineering and Science, 1977, Vol. 17, n° 1, pages 46 à 49.

La quantité d'agent de couplage nécessaire pour assurer une bonne liaison entre la charge minérale de renforcement et le polymère de base est relativement petite. Une quantité de seulement 0,1% d'agent de couplage par rapport au poids de la charge peut être utilisée pour produire une composition ayant des propriétés mécaniques supérieures à celles de la composition contenant une charge non traitée. En général, des quantités d'agent de couplage comprises entre 0,3% et 4% se sont révélées très satisfaisantes. A noter que des quantités plus grandes peuvent aussi être utilisées sans inconvénient pour les propriétés du produit fini.

Les compositions polymériques renforcées selon la présente invention peuvent être préparées de diverses manières connues en soi.

Au départ de polymères thermoplastiques et thermodurcissables, le mélange des divers constituants est fait de préférence en deux périodes: une première période dans laquelle les divers constituants sont agités ensemble à température ambiante dans un mélangeur à poudre classique (qui peut être simplement la trémie d'alimentation d'une extrudeuse) et une seconde période dans laquelle ce mélange est homogénéisé par malaxage à chaud dans une extrudeuse à une ou plusieurs vis. A l'issue de ce traitement, les compositions de l'invention se présentent en général sous la forme de joncs qui sont ensuite découpés en granulés; ces granulés seront utilisés ultérieurement pour le formage des articles souhaités en opérant dans les appareils classiques de moulage par injection, transfert ou extrusion.

Au départ de polymères élastomériques, le mélange des divers constituants est fait en général par passage direct de l'ensemble des divers constituants dans un mélangeur lent approprié (broyeur lent, mélangeur de type interne, malaxeur à cylindres, etc.) porté à la température adéquate. A l'issue de ce traitement, les compositions de l'invention se présentent en général sous la forme de pâtes d'épaisseur variable; ces pâtes seront utilisées ultérieurement pour façonner les compositions à la forme désirée en ayant recours aux techniques usuelles de façonnage des matières élastomériques, par exemple par calandrage ou par moulage. Après façonnage des compositions à la forme désirée, on les soumet ensuite à un traitement de vulcanisation.

Dans le cas préféré où l'on met en oeuvre un agent de couplage, ce dernier peur être incorporé dans le milieu de préparation des compositions selon l'invention de différentes manières: selon une première

variante, l'agent de couplage peut être déposé au préalable sur la charge qui va servir à renforcer le polymère; selon une seconde variante, l'agent de couplage peut être déposé au préalable sur le polymère avant l'ajout de la charge; selon une troisième variante, l'agent de couplage peut être mélangé directement avec le polymère et la charge. Compte tenu de ce qui précède, l'expression "divers constituants", qui apparaît ci-avant à propos des modes de préparation des compositions selon l'invention, va signifier: variante 1: charge minérale prétraitée+polymère; variante 2: charge minérale+polymère prétraité; variante 3: polymère+charge minérale+agent de couplage.

Le traitement par l'agent de couplage, quand on en utilise un, s'effectue habituellement par incorporation directe ou progressive de ce dernier, à l'état pur ou dissout dans un solvant approprié, dans la charge (variante 1), dans le polymère (variante 2) ou dans l'ensemble charge+polymère (variante 3). Dans le cas de la variante 1 notamment, il est possible de traiter la charge par la technique du mélange en lit fluidisé ou par la technique employant un mélangeur rapide.

Les compositions polymériques selon l'invention peuvent être préparées encore en confectionnant un mélange maître, présenté sous forme de granulés ou de pâte à base d'une partie du polymère à renforcer, de charge et éventuellement d'agent de couplage, qui sera mélangé ensuite avant mise en oeuvre avec des granulés ou une pâte du reste du polymère à renforcer.

Une autre méthode encore de préparation des compositions de l'invention consiste à polymériser les monomères formant le polymère en présence de la charge de renforcement éventuellement traitée, la polymérisation pouvant avoir lieu dans le moule ayant la forme de l'article désiré. Le traitement par l'agent de couplage, s'il a lieu, peut être effectué aussi pendant la polymérisation.

Les compositions polymériques selon l'invention peuvent contenir, en outre, un ou plusieurs additifs comme par exemple des pigments, des stabilisants, des agents de nucléation, des accélérateurs de durcissement et de vulcanisation, des modificateurs de caractéristiques à l'écoulement et des composés destinés à améliorer le fini de surface des articles ou à modifier le comportement des compositions au moulage. Les quantités incorporées de ces additifs ne dépassent pas en général 40% du poids de la matrice polymérique.

Au départ des polyamides qui sont les polymères particulièrement préférés pour la mise en oeuvre de la présente invention, on peut incorporer, en outre, dans les compositions de l'invention, dans le but d'améliorer encore leurs propriétés mécaniques à des températures aussi basses que celles allant de 0°C à −20°C, des composés polymériques consistant dans des copolymères dérivant d'au moins une oléfine et d'au moins un autre monomère copolymérisable et comportant des groupes carboxyles et/ou carboxylates.

Plus précisément on peut faire appel dans ce contexte:

. à des copolymères oléfiniques dérivant d'une α-oléfine aliphatique comportant de 2 à 6 atomes de carbone (par exemple: éthylène, propylène, butène-1, pentène-1, hexène-1) et d'au moins un composé appartenant à la classe des mono-ou diacides carboxyliques α,β-insaturés comportant de 3 à 8 atomes de carbones (par exemple: acide acrylique, acide méthacrylique, acide maléique, acide fumarique, acide itaconique, acide vinylbenzoïque), les esters d'alkyles inférieurs et les anhydrides dérivés de ces acides; des copolymères qui conviennent bien sont par exemple: les copolymères éthylène-acide acrylique, éthylène-acide méthacrylique, éthylène-acide acrylique-méthacrylate de méthyle;

. à des copolymères oléfiniques contenant des groupes carboxyles et/ou carboxylates et dérivant d'éthylène et d'au moins une α-oléfine ayant de 3 à 6 atomes de carbone. Comme α-oléfine ayant de 3 à 6 atomes de carbone, on utilise de préférence le propylène, cependant une autre α-oléfine de ce type, notamment le butène-1, le pentène-1 et l'hexène-1, peut être choisie à la place ou en addition au propylène. L'introduction des groupes carboxyles et/ou carboxylates peut être faite: soit par copolymérisation directe du mélange éthylène-α-oléfine ayant de 3 à 6 atomes de carbone avec au moins un composé insaturé appartenant à la classe des diacides carboxyliques α,β-insaturés comportant de 4 à 8 atomes de carbone (acide maléique, acide fumarique, acide itaconique), les esters d'alkyles inférieurs et les anhydrides dérivés de ces acides; soit par greffage du (ou des) composé(s) acide(s) (acide et/ou dérivé) sur la base oléfinique, induit par ionisation, par hydroperoxydation ou sous l'effet de la chaleur et de la pression. Des copolymères qui conviennent bien sont par exemple: les copolymères éthylène-propylène greffé anhydride maléique, éthylène-propylène greffé acide fumarique;

. à des copolymères contenant des groupes carboxyles et/ou carboxylates et dérivant d'éthylène, d'au moins une α-oléfine ayant de 3 à 6 atomes de carbone et d'au moins un diène non conjugué. De préférence on utilise ici à nouveau, comme α-oléfine ayant de 3 à 6 atomes de carbone le propylène. Le diène non conjugué consiste habituellement dans un diène aliphatique comportant au moins 6 atomes de carbone qui possède une double liaison terminale et une double liaison interne; de préférence on utilise ici l'hexadiène-1,4. L'introduction des groupes carboxyles et/ou carboxylates est faite en traitant le mélange éthylène-α-oléfine—diène comme indiqué ci-avant dans le cas du mélange éthylène-α-oléfine. Des copolymères qui conviennent bien sont par exemple: les copolymères éthylène-propylène-hexadiène-1,4 greffé anhydride maléique et éthylène-propylène-hexadiène-1,4 greffé acide fumarique.

Les copolymères fonctionnalisés appartenant aux types définis ci-avant ont déjà fait l'objet d'une application au renfort des polyamides; pour plus de détails à propos de leur définition et de leurs

conditions de mise en oeuvre on peut se reporter au brevet français n° 2.311.814. Les quantités de copolymères fonctionnalisés à mettre en oeuvre éventuellement représent habituellement 2% à 60% du poids du polyamide de base de la composition.

Les compositions de la présente invention sont caractérisées par des propriétés mécaniques qu'on ne pouvait pas obtenir précédemment avec des polymères, notamment des polyamides, renforcés par des matières minérales. Pour être plus spécifique, il est possible d'élaborer des polyamides chargés présentant un module de flexion (tel que mesuré dans les conditions définies ci-après) supérieurs à 4300 MPa, une résistance au choc entaillé (telle que mesurée dans les conditions définies ci-après) supérieure à 5 $kJ/m^2$ et une température de flexion sous charge (telle que mesurée dans les conditions définies ci-après) supérieure à 85°C. Les compositions de polyamide de l'art antérieur chargées de talc (non calciné) ont un module de flexion qui peut atteindre et dépasser 6000 MPa, mais elles présentent généralement une résistance au choc entaillé qui est au plus égale à 4 $kJ/m^2$. Quant aux compositions de polyamide chargé de kaolin calciné, si elles ont une résistance au choc entaillé que est généralement satisfaisante, elles présentent par contre un module de flexion qui reste inférieur à la valeur de 4300 MPa dont on a parlé ci-avant et une température de flexion sous charge inférieure à 85°C.

Les exemples non limitatifs suivants montrent comment la présente invention peut être mise en oeuvre pratiquement.

Exemple 1

En opérant dans un mélangeur Röhn de la Société Engelsmann on met en contact direct:

. 3 500 g de nylon 6,6 commercialisé par la Société Rhône-Poulenc Spécialtés Chimiques sous la marque déposée Technyl A 216;
. 1 500 g de talc commercialisé par la Société des talcs de Luzenac ayant été calciné pendant 4 heures dans un four statique à une température de 1 000°C; la dispersion granulométrique de cette charge est la suivante: 100% de particules de moins de 20 micromètres; 90% de particules de moins de 10 micromètres; 60% de particules de moins de 5 micromètres; 20% de particules de moins de 2 micromètres; sa surface spécifique est d'environ 5 $m^2/g$;
. et 15 g de γ-aminopropyltriéthoxysilane commercialisé par la Société Union Carbide sous la marque déposée Silane A 1100.

Ce mélange est homogénéisé à température ambiante puis il est introduit dans la trémie d'alimentation d'une extrudeuse à double vis commercialisée par la Société Werner-Pfleiderer, type ZSK 30 afin de disperser convenablement la charge minérale dans la matrice de polyamide. Le profil des températures de l'extrudat est équilibré dans les conditions de marche régulière comme suivant:

— entrée: 262°C;
— milieu de corps de l'extrudeuse: 270°C;
— extrémité: 272°C;
— filière: 270°C.

La vitesse de rotation des vis est fixée à 200 tours/minute. Le débit de produit extrudé est de l'ordre de 11,4 kg/heure. L'extrudeuse est équipée d'une filière à 3 trous et on obtient des joncs qui sont ensuite découpés en granulés d'environ 3 mm de longueur et de 1,5 mm de diamètre.

Dans le but de tester les propriétés mécaniques des articles obtenus à partir de pareils granulés, on procède à un certain nombre d'essais dont la nature est indiquée ci-dessous:

. essais de flexion: la résistance et le module en flexion sont mesurés selon les indications de la norme ASTM D 790, et la température de flexion sous charge (TFSC) est mesurée selon les indications de la norme ASTM D 648;
. essais de choc Charpy: les résistances au choc Charpy sur éprouvettes entaillées sont mesurées selon les indications de la norme ASTM D 256 en opérant avec des éprouvettes conditionnées à EH 0 (les éprouvettes sont placées en déssicateur sur silicagel et séchées de nouveau 24 heures à température ambiante sous une pression réduite de 0,67. $10^2$ à 1,33. $10^2$ Pa avant de réaliser les mesures).

Dans le but de préparer les éprouvettes nécessaires à la réalisation de ces essais, on effectue un moulage en introduisant ces granulés dans une presse à injecter commercialisée par la Société Buhler Rover, type 100 B. Le moule est du type "doigts", chaque doigt correspondant à une éprouvette dont la forme et les dimensions correspondent à celles définies par les normes ASTM mentionnées précédemment. Dans cette presse, la composition de moulage sous forme de granulés est fondue à une température de 270°C à 280°C tandis que le moule est maintenu à une température de 60°C. La pression d'injection est de 750. $10^5$ Pa. La durée d'un cycle d'injection est de 30 secondes. Les résultats des essais de flexion et de choc sont indiqués dans le tableau 1 suivant.

A titre d'essai comparatif (essai A), on a reproduit les mêmes opérations que celles décrites ci-avant mais en utilisant cette fois du talc non calciné.

Encore à titre d'essai comparatif (essai B), on a reproduit les mêmes opérations que celles décrites ci-avant mais en utilisant cette fois à la place des 1 500 g de talc calciné, la même quantité de kaolin calciné commercialisé par la Société English China Clays sous la marque déposée Polestar 200 R. La dispersion granulométrique de cette charge est la suivante: 99,9% de particules de moins de 50 micromètres; 95% de particules de moins de 10 micromètres; 60% de particules de moins de 2 micromètres; sa surface spécifique est d'environ 8,5 $m^2/g$.

TABLEAU 1

| Exemple/ Essai | Flexion | | | Choc Charpy Entaille $kJ/m^2$ |
|---|---|---|---|---|
| | Résistance MPa | Module MPa | TFSC °C | |
| 1 | 154 | 5120 | 116 | 6,2 |
| A | 157 | 6360 | 141 | 4 |
| B | 146 | 4250 | 73 | 6,5 |

Les articles moulés contenant du talc calciné (exemple 1) présentent de plus une coloration beige claire qui est préférable à la coloration grise présentée par les articles contenant du talc non calciné (essai A). Les articles contenant du kaolin calciné (essai B) présentent une coloration beige sensiblement plus foncée.

Exemple 2

On a reproduit les mêmes opérations que celles décrites ci-avant à l'exemple 1 mais en utilisant cette fois, à la place des 1 500 g de talc calciné, la même quantité de palygorskite calcinée pendant 4 heures à 850°C. Cette espèce argileuse est issue du gisement de Pont au Sénégal de la Société Rhône-Poulenc Chimie de Base. La dispersion granulométrique de cette charge est la suivante: 100% de particules de moins de 50 micromètres, 95% de particules de moins de 20 micromètres; 90% de particules de moins de 10 micromètres; 80% de particules de moins de 5 micromètres; 70% de particules de moins de 2 micromètres; sa surface spécifique est d'environ 9 $m^2/g$.

Les propriétés mécaniques des articles moulés obtenus sont les suivantes:

— essais de flexion:
. résistance: 133 MPa
. module: 4115 MPa
. TFSC: 77°C

— choc Charpy entaillé: 6 $kJ/m^2$

Exemple 3

En opérant dans un mélangeur rapide de la Société Henschel tournant à 1 500 tours/minute, on met en contact direct pendant 6 minutes à température ambiante:

. 1 500 g de talc calciné identique à celui décrit ci-avant à l'exemple 1;
. avec 15 g de vinyltriéthoxysilane commercialisé par la société Union Carbide sous la marque déposée Silane A 151.

La charge minérale de renforcement ainsi obtenue sur laquelle a été déposé l'agent de couplage est introduite ensuite dans un mélangeur Röhn contenant 3 500 g de polypropylène commercialisé par la Société British Petroleum sous la marque déposée Napryl 61400 AG. Après agitation de l'ensemble à température ambiante, le mélange résultant est homogénéisé par malaxage à chaud dans l'extrudeuse Werner-Pfleiderer mise en oeuvre à l'exemple 1; le profil des températures est le suivant:

— entrée: 240°C;
— milieu des corps de l'extrudeuse: 230°C;
— extrémité: 230°C;
— filière: 230°C.

La vitesse de rotation des vis est fixée à 200 tours/minute; le débit de produit extrudé est de l'ordre de 12 kg/heure.

Les joncs qui sont obtenus sont granulés, puis ces derniers sont soumis à une opération de moulage à l'aide de la presse à injecter décrite précédemment à l'exemple 1. Dans cette presse, les granulés sont fondus à une température de l'ordre de 240°C à 250°C tandis que le moule est maintenu à une température

de 45°C. La pression d'injection est de 750. $10^5$ Pa. La durée du cycle d'injection est de 25 secondes. Les résultats des essais de flexion et de choc sont indiqués dans le tableau 2 suivant.

A titre d'essai comparatif (essai C), on a reproduit les mêmes opérations que celles décrites ci-avant mais en utilisant cette fois, à la place des 1500 g de talc calciné, la même quantité de kaolin calciné commercialisé par la Société Freeport Kaolin sous la marque déposée Whitetex. La dispersion granulométrique de cette charge est la suivante: 99,9% de particules de moins de 10 micromètres; 90% de particules de moins de 5 micromètres; 60% de particules de moins 2 micromètres; sa surface spécifique est d'environ 10 $m^2/g$.

TABLEAU 2

| Exemple/ Essai | Flexion | | | Choc Charpy Entaille kJ/$m^2$ |
|---|---|---|---|---|
| | Resistance MPa | Module MPa | TFSC °C | |
| 3 | 57 | 3235 | 72 | 3,8 |
| C | 56 | 2805 | 64 | 3,9 |

Exemple 4

On a reproduit les mêmes opérations que celles décrites ci-avant à l'exemple 1, mais en utilisant cette fois 3 500 g d'un polycarbonate de bisphénol A commercialisé par la Société General Electric sous la marque déposée Lexan 101.

L'extrusion du mélange polycarbonate/talc calciné/silane est faite dans les conditions de température suivantes:

— entrée extrudeuse: 280°C;
— milieu du corps de l'extrudeuse: 285°C;
— extrémité: 290°C;
— filière: 300°C;

La vitesse de rotation des vis est fixée à 200 tours/minute; le débit de produit extrudé est de l'ordre de 13 kg/heure.

Le moulage des granulés obtenus est fait à l'aide de la presse à injecter décrite précédemment dans les conditions suivantes: température de la matière: 305°C à 320°C; température du moule: 85°C; pression d'injection: 750. $10^5$ Pa; cycle d'injection: 60 secondes. Les résultats des essais de flexion et de choc sont indiqués dans le tableau 3 suivant.

A titre d'essai comparatif (essai D), on reproduit l'exemple 4 en remplaçant les 1 500 g de talc calciné par la même quantité de talc non calciné.

TABLEAU 3

| Exemple/ Essai | Flexion | | | Choc Charpy Entaille kJ/$m^2$ |
|---|---|---|---|---|
| | Résistance MPa | Module MPa | TFSC °C | |
| 4 | 123 | 4875 | 129 | 4,5 |
| D | 110 | 5455 | 131 | 3,2 |

Exemple 5

En opérant dans un mélangeur de la Société Röhn, on met en contact direct:

. 1 500 g d'un polycondensat phénol-formol en poudre de type novolaque, ayant un point de fusion de 79°C et une viscosité apparente de 17 Pa.s à 132°C;
. le mélange issu du traitement préalable, effectué conformément aux indications données ci-avant en début d'exemple 3, de 1 500 g de talc calciné (identique à celui décrit dans l'exemple 1) avec 15 g de γ-aminopropyltriéthoxysilane;
. 490 g de sciure de bois;
. 230 g d'hexaméthylènetétramine;
. 20 g d'hydroxyde alcalino-terreux;
. 3 g de stéarate de zinc;
. et 0,5 g d'un colorant noir commercialisé par la Société Bayer sous la marque déposée Phénol Schwarz L.

Après agitation de l'ensemble à température ambiante, le mélange résultant est homogénéisé par malaxage à chaud dans l'extrudeuse Werner-Pfleiderer mise en oeuvre à l'exemple 1; le profil des températures est le suivant:

— entrée de l'extrudeuse: 25°C;
— milieu des corps de l'extrudeuse: 45°C;
— extrémité: 105°C;
— filière: 105°C.

La vitesse de rotation des vis est fixée à 200 tours/minute; le débit de produit extrudé est de l'ordre de 15 kg/heure.

Le produit sortant de l'extrudeuse est broyé pour conduire à une poudre qui est d'abord chauffée 30 minutes à 90°C, puis moulée par compression sous forme de plaquettes de dimensions 120×120×4 mm à l'aide d'une presse de la Société Pinette-Emidécau en opérant à une température de 165°C et sous une pression de $400 \cdot 10^5$ Pa pendant 3 minutes 30 secondes. Des éprouvettes, dont la forme et les dimensions correspondent aux normes ASTM données ci-avant à l'exemple 1, ont été découpées ensuite dans ces plaquettes. Les résultats des essais de flexion et de choc sont indiqués dans dans le tableau 4 suivant.

A titre d'essai comparatif (essai E), on a reproduit l'exemple 5 en remplaçant les 1 500 g de talc calciné par la même quantité de talc non calciné.

TABLEAU 4

| Exemple/ Essai | Flexion Résistance MPa | Flexion Module MPa | Flexion TFSC °C | Choc Charpy Entaille kJ/m² |
|---|---|---|---|---|
| 5 | 109 | 12350 | 195 | 1,6 |
| E | 62,2 | 11370 | 192 | 1,4 |

Exemple 6

On met en contact direct, dans un mélange interne de type Bandeburry de la Société Farrel, les constituants suivants:

. 1 000 g de polychloroprène commercialisé par la Société Distugil sous la marque déposée Butaclor MC 30;
. 40 g de magnésie commercialisée par la Société Merck sous la marque déposée Maglite D;
. 20 g d'un additif anti-oxygène commercialisé par la Société Vulnax sous la marque déposée Permanax OD.

Après 3 minutes d'agitation, on introduit ensuite dans ce mélangeur:

. le mélange issu du traitement préalable (effectué conformément aux indications données ci-avant en début d'exemple 3) de 600 g de talc commercialisé par la Société Cyprus Industrial Corporation sous la marque déposée Mistron Vapor, ayant été calciné pendant 4 heures dans un four statique à une température de 950°C, avec 18 g de γ-mercaptopropyltriméthoxysilane commercialisé par la Société Union Carbide sous la marque déposée Silane A 189; le talc calciné mis en oeuvre présente la dispersion granulométrique suivante: 100% de particules de moins de 20 micromètres, 80% de particules de moins de 10 micromètres, 55% de particules de moins de 5 micromètres, 15% de particules de moins de 2 micromètres; sa surface spécifique est d'environ 4 $m^2/g$;
. et 100 g d'un additif plastifiant commercialisé par la Société Shell sous la marque déposée Somil B.

L'ensemble des constituants précités est mélangé pendant une durée de 12 minutes à une température de l'ordre de 70°C.

Le gâteau obtenu est repris dans un malaxeur à cylindres de type LV de la Société Blère et il est malaxé pendant 12 nouvelles minutes, à température ambiante, en présence des autres ingrédients suivants:

. 50 g d'oxyde de zinc;
. 10 g d'éthylène thiourée commercialisée par la Société du Pont de Nemours sous la marque déposée NA 22;
. et 5 g de disulfure de tétraméthylthiuram commercialisé par la Société Vulnax sous la marque déposée Vulcafor TMDT.

Le mélange qui est finalement obtenu est vulcanisé sous presse Pinette-Emidécau, dans un moule, en opérant à 160°C pendant 12 minutes, sous une pression de $250 \cdot 10^5$ Pa. Des éprouvettes, dont la forme et les dimensions correspondent aux normes régissant les essais mécaniques effectués, ont été ensuite découpées. Les essais qui ont été effectués sont les suivants: essais de traction: la résistance à la rupture et le module de traction à 200% d'allongement sont mesurés selon les indications de la norme NF T 46 002; essais de déchirement: la résistance au déchirement est mesurée selon les indications de la norme NF T 46 007 (méthode C); mesure de déformations rémanentes après NF T 46 007 (méthode C); mesure de déformations rémanentes après compression après 24 heures à 70°C (en abréviation DRC): elle est effectuée selon les indications de la norme NF T 46 011; et mesure de la résistance à l'abrasion selon la méthode Zwick. Les résultats des essais mécaniques effectués sont indiqués dans le tableau 5 suivant.

A titre d'essai comparatif (essai F), on a reproduit l'exemple 6 en remplaçant les 600 g de talc calciné par la même quantité de talc non calciné.

TABLEAU 5

| Exemple/Essai / Proprietes | 6 | F |
|---|---|---|
| Résistance en traction (MPa) | 15,5 | 12 |
| Module à 200% d'allongement (MPa) | 11 | 9,5 |
| Résistance au déchirement (daN/cm) | 43 | 51 |
| DRC (%) | 6 | 11 |
| Abrasion (perte en $mm^3$) | 190 | 250 |

Exemple 7

On met en contact direct, dans une calandre de la Société Troster, les constituants suivants:

. 100 g d'un polydiméthylsiloxane de poids moléculaire égal à 600 000 ayant 16 groupements vinyle par mole;
. et 40 g de talc calciné identique à celui décrit ci-avant à l'exemple 6.

Après 15 minutes de malaxage à température ambiante, on introduit dans le mélange résultant 1,2 g de peroxyde de dichloro-2,4 benzoyle et on continue le malaxage pendant 5 autres minutes.

La pâte ainsi obtenue est vulcanisée sous presse Pinette-Emidécau, dans un moule, en opérant à 115°C pendant 8 minutes, sous une pression de $150 \cdot 10^5$ Pa. Des éprouvettes dont la forme et les dimensions correspondent aux normes régissant les essais mécaniques effectués, ont été ensuite découpées. Les essais qui ont été effectués sont les suivants: essais de traction: la résistance à la rupture et l'allongement à la rupture ont été mesurés selon les indications de la norme NF T 46 002; mesure de la résistance au déchirement: elle est effectuée selon les indications de la norme ASTM D 624 A; mesure de déformations rémanentes après compression après 22 heures à 177°C (DRC): elle est effectuée selon les indications de la norme ASTM D 395 B. Les résultats des essais mécaniques effectués sont indiqués dans le tableau 6 suivant.

A titre comparatif (essai G), on a reproduit l'exemple 7 en remplaçant les 40 g de talc calciné par la même quantité de talc non calciné.

TABLEAU 6

| Exemple/Essai / Proprietes | 7 | G |
|---|---|---|
| Résistance en traction (MPa) | 2,2 | 1,6 |
| Allongement à la rupture (%) | 220 | 275 |
| Résistance au déchirement (daN/cm) | 240 | 280 |
| DRC (%) | 24 | 96 |

**Revendications**

1. Compositions faites pour le moulage qui comprennent:
(a) un polymère,
(b) une charge minérale de renforcement
(c) et éventuellement un agent de couplage,
caractérisées en ce que la charge minérale est essentiellement constituée par un mélange intime d'enstatite et de silice tel qu'il est obtenu par calcination à une température au moins égale à 800°C d'espèces argileuses appropriées.

2. Compositions selon les revendications 1, caractérisées en ce que les espèces argileuses soumises à la calcination sont choisies dans le groupe formé par la chlorite, l'illite, la palygorskite, la saponite, le talc ou des mélanges de ces espèces.

3. Compositions selon les revendications 2, caractérisées en ce que l'on fait appel à du talc.

4. Compositions selon l'une quelconque des revendications 1 à 3, caractérisées en ce que le polymère qui est renforcé est un polymère thermoplastique.

5. Compositions selon la revendication 4, caractérisées en ce que le polymère est une polyoléfine.

6. Compositions selon la revendication 4, caractérisées en ce que le polymère est un polyamide.

7. Compositions selon la revendication 4, caractérisées en ce que le polymère est un polycarbonate.

8. Compositions selon l'une quelconque des revendications 1 à 3, caractérisées en ce que le polymère qui est renforcé est un polymère thermodurcissable.

9. Compositions selon la revendication 8, caractérisées en ce que polymère est une résine phénolique.

10. Compositions selon la revendication 8, caractérisées en ce que le polymère est un polyimide.

11. Compositions selon l'une quelconque des revendications 1 à 3, caractérisées en ce que le polymère qui est renforcé est un polymère élastomérique.

12. Compositions selon la revendications 11, caractérisée en ce que le polymère est un polychloroprène.

13. Compositions selon la revendication 11, caractérisée en ce que le polymère est un silicone élastomère.

14. Compositions selon l'une quelconque des revendications 1 à 13, caractérisées en ce que l'agent de couplage, quand on choisit d'en utiliser un, est un composé organosilicique polyfonctionnel comprenant au moins un groupe alkoxysilane capable de se lier avec la charge minérale et au moins un groupe capable de se lier avec le polymère.

15. Compositions selon l'une quelconque des revendications 1 à 14, caractérisées en ce qu'elles renferment:

. des proportions de charge minérale de renforcement qui représentent 2 à 90% et de préférence 10 à 60% du poids de l'ensemble polymère+charge minérale de renforcement;
. des proportions d'agent de couplage, quand on choisit d'en utiliser un, qui représentent 0,3 à 4% du poids de la charge minérale de renforcement.

16. Procédé de préparation des compositions selon les revendications 1 à 10, 14 et 15, caractérisé en ce que, au départ de polymères thermoplastiques et thermodurcissables, le mélange des divers constituants est fait en deux périodes: une première période dans laquelle les divers constituants sont agités ensemble à température ambiante dans un mélangeur à poudre classique et une seconde période dans laquelle ce mélange est homogénéisé par malaxage à chaud dans une extrudeuse à une ou plusieurs vis.

17. Procédé de préparation des compositions selon les revendications 1 à 3 et 11 à 15, caractérisé en ce que, au départ de polymères élastomériques, le mélange des divers constituants est fait par passage direct de l'ensemble des divers constituants dans un mélangeur lent approprié porté à la température adéquate.

18. A titre de moyen destiné à la mise en oeuvre du procédé selon l'une quelconque des revendications 16 et 17, la charge minérale de renforcement telle que définie à l'une des revendications 1 à 3 précédentes sur laquelle a été déposé, au préalable, un agent de couplage consistant en un composé organosilicique polyfonctionnel comprenant au moins un groupe alkoxysilane capable de se lier avec la charge minérale et au moins un groupe capable de se lier avec le polymère.

19. Objets moulés obtenus à partir des compositions selon l'une quelconque des revendications 1 à 15.

**Patentansprüche**

1. Formmassen, die enthalten:
(a) ein Polymer,
(b) eine mineralische Verstärkungscharge,
(c) und gegebenenfalls ein Kupplungsmittel,
dadurch gekennzeichnet, daß die mineralische Charge im wesentlichen aus einer innigen Mischung von Enstatit und Siliciumdioxid besteht, wie sie durch Brennen geeigneter Tonsorten bei einer Temperatur von zumindest 800°C erhalten wird.

2. Massen nach Anspruch 1, dadurch gekennzeichnet, daß die zu brennenden Tonsorten ausgewählt

sind aus der Gruppe, bestehend aus Chlorit, Illit, Palygorskit, Saponit, Talkum, oder Mischungen dieser Sorten.

3. Massen nach Anspruch 2, dadurch gekennzeichnet, daß man Talkum einsetzt.

4. Massen nach einem der Ansprüche 1 bis 3, dadurch gekennzeichnet, daß das Polymer, das verstärkt wird, ein thermoplastisches Polymer ist.

5. Massen nach Anspruch 4, dadurch gekennzeichnet, daß das Polymer ein Polyolefin ist.

6. Massen nach Anspruch 4, dadurch gekennzeichnet, daß das Polymer ein Polyamid ist.

7. Massen nach Anspruch 4, dadurch gekennzeichnet, daß das Polymer ein Polycarbonat ist.

8. Massen nach einem der Ansprüche 1 bis 3, dadurch gekennzeichnet, daß das Polymer, das verstärkt wird, ein warmhärtbares Polymer ist.

9. Massen nach Anspruch 8, dadurch gekennzeichnet, daß das Polymer ein Phenolharz ist.

10. Massen nach Anspruch 8, dadurch gekennzeichnet, daß das Polymer ein Polyimid ist.

11. Massen nach einem der Ansprüche 1 bis 3, dadurch gekennzeichnet, daß das Polymer, das verstärkt wird, ein elastomeres Polymer ist.

12. Massen nach Anspruch 11, dadurch gekennzeichnet, daß das Polymer ein Polychloropren ist.

13. Massen nach Anspruch 11, dadurch gekennzeichnet, daß das Polymer ein elastomeres Silicon ist.

14. Massen nach einem der Ansprüche 1 bis 13, dadurch gekennzeichnet, daß das Kupplungsmittel, falls man eines verwendet, eine polyfunktionelle Organosiliciumverbindung ist, die zumindest eine Alkoxysilangruppe, die sich mit der mineralischen Charge zu verbinden vermag, und zumindest eine Gruppe enthält, die sich mit dem Polymer zu verbinden vermag.

15. Massen nach einem der Ansprüche 1 bis 14, dadurch gekennzeichnet, daß sie enthalten:

— die mineralische Charge in Anteilen, die 2 bis 90 Gew.-% und zugsweise 10 bis 60 Gew.-% der Gesamtmenge von Polymer+mineralischer Verstärkungscharge ausmachen;
— das Kupplungsmittel—falls man eines verwendet—in Anteilen, die 0,3 bis 4 Gew.-% der mineralischen Verstärkungscharge ausmachen.

16. Verfahren zur Herstellung von Massen nach den Ansprüchen 1 bis 10, 14 und 15, dadurch gekennzeichnet, daß man, ausgehend von thermoplastischen und warmhärtbaren Polymeren, die Mischung der verschiedenen Bestandteile in zwei Perioden vornimmt: in der ersten Periode werden die verschiedenen Bestandteile bei Umgebungstemperatur in einen klassischen Pulvermischer vermischt und in der zweiten Periode wird diese Mischung durch Heißmischen in einer Strangpresse mit einer oder mehreren Schnecken homogenisiert.

17. Verfahren zur Herstellung von Massen nach den Ansprüchen 1 bis 3 und 11 bis 15, dadurch gekennzeichnet, daß man, ausgehend von elastomeren Polymeren, die Mischung der verschiedenen Bestandteile herstellt, indem man alle verschiedenen Bestandteile direkt einen geeigneten langsamen Mischer, der auf die entsprechende Temperatur gebracht wurde, passieren läßt.

18. Als Mittel zur Durchführung des Verfahrens nach einem der Ansprüche 16 und 17 die mineralische Verstärkungscharge, wie in einem der vorhergehenden Ansprüche 1 bis 3 angegeben, auf welcher zuvor ein Kupplungsmittel abgelagert wurde, das aus einer polyfunktionellen Organosiliciumverbindung besteht, die zumindest eine Alkoxysilangruppe, die sich mit der mineralischen Charge zu verbinden vermag, und zumindest eine Gruppe, die sich mit dem Polymeren zu verbinden vermag, enthält.

19. Formkörper, hergestellt aus den Massen nach einem der Ansprüche 1 bis 15.

**Claims**

1. Moulding compounds which comprise:
(a) a polymer,
(b) an inorganic reinforcing filler and, if appropriate,
(c) a coupling agent,
characterized in that the inorganic filler consists essentially of an intimate mixture of enstatite and of silica, such as produced by calcining appropriate clay species at a temperature of at least 800°C.

2. Compounds according to Claim 1, characterized in that the clay species subjected to calcining are chosen from the group consisting of chlorite, illite, palygorskite, saponite, talc or mixtures of these species.

3. Compounds according to Claim 2, characterized in that talc is used.

4. Compounds according to any one of Claims 1 to 3, characterized in that the polymer which is reinforced is a thermoplastic polymer.

5. Compounds according to Claim 4, characterized in that the polymer is a polyolefin.

6. Compounds according to Claim 4, characterized in that the polymer is a polyamide.

7. Compounds according to Claim 4, characterized in that the polymer is a polycarbonate.

8. Compounds according to any one of Claims 1 to 3, characterized in that the polymer which is reinforced is a thermosetting polymer.

9. Compounds according to Claim 8, characterized in that the polymer is a phenolic resin.

10. Compounds according to Claim 8, characterized in that the polymer is a polyimide.

11. Compounds according to any one of Claims 1 to 3, characterized in that the polymer which is reinforced is an elastomeric polymer.

12. Compounds according to Claim 11, characterized in that the polymer is a polychloroprene.

13. Compounds according to Claim 11, characterized in that the polymer is a silicone elastomer.

14. Compounds according to any one of Claims 1 to 13, characterized in that, when it is decided to use a coupling agent, the latter is a polyfunctional organosilicon compound containing at least one alkoxysilane group capable of bonding to the inorganic filler and at least one group capable of bonding to the polymer.

15. Compounds according to any one of Claims 1 to 14, characterized in that they include:

proportions of inorganic reinforcing fillers which represent 2 to 90%, and preferably 10 to 60%, of the combined weight of polymer+the inorganic reinforcing filler;

proportions of a coupling agent, when it is decided to use the latter, which represent 0.3 to 4% of the weight of the inorganic reinforcing filler.

16. Process for the preparation of the compounds according to Claims 1 to 10, 14 and 15, characterized in that, when starting with thermoplastic and thermosetting polymers, the mixing of the various constituents is carried out in two stages: a first stage in which the various constituents are stirred together at ambient temperature in a conventional powder mixer, and a second stage in which this mixture is homogenized by hot compounding in a single- or multiple-screw extruder.

17. Process for the preparation of the compounds according to Claims 1 to 3 and 11 to 15, characterized in that, when starting with elastomeric polymers, the mixing of the various constituents is carried out by passing the combination of the various constituents directly through an appropriate slow mixer heated to a suitable temperature.

18. As a means intended for implementing the process according to either of Claims 16 and 17, the inorganic reinforcing filler as defined in one of the above Claims 1 to 3, on which there has been deposited, beforehand, a coupling agent consisting of a polyfunctional organosilicon compound containing at least one alkoxysilane group capable of bonding to the inorganic filler and at least one group capable of bonding to the polymer.

19. Moulded articles produced from the compounds according to any one of Claims 1 to 15.